# EUROPÄISCHE PATENTANMELDUNG

(11) **EP 1 143 748 A2**
(43) Veröffentlichungstag der Anmeldung: **10.10.2001**
(21) Anmeldenummer: 01250120.1
(22) Anmeldetag: 05.04.2001
(51) Int. Cl.: H04Q 3/00

(54) **Signallisierungsdurchgangssystem**

(30) Priorität: 05.04.2000 DE 10017631
(71) Anmelder: Teles AG Informationstechnologien, 10587 Berlin (DE)
(72) Erfinder: Kessmeier, Jens, 10587 Berlin (DE); Paetsch, Frank, 10961 Berlin (DE); Schönberger, Peter, 10827 Berlin (DE); Bastian, Jan, 13437 Berlin (DE)
(74) Vertreter: Müller, Wolfram Hubertus, Dipl.-Phys.

(57) **Zusammenfassung**

Die Erfindung betrifft ein Verfahren zum transparenten Übertragen von Außenband-Signalisierungsinformationen eines Leitungsvermittlungsnetzes über ein Paketvermittlungsnetz, bei dem Signalisierungsinformationen von einem sendenden Switch (11) zu einem ersten Gateway (5), vom ersten Gateway über das Paketvermittlungsnetz (7) zu einem zweiten Gateway (6) und vom zweiten Gateway (6) zu einem empfangenden Switch (21) übertragen werden. Dabei wird im ersten Gateway (5) die Adresse des empfangenden Switch (DPC) erfaßt und dieser anhand einer Zuordnungstabelle die Adresse eines zweiten Gateway (6) zugeordnet. Die Signalisierungsinformationen werden im ersten Gateway (5) paketiert und als Pakete bestehend aus Header und Datenteil über das Paketvermittlungsnetz an den zweiten Gateway (6) übertragen. Dabei weisen die Header der Pakete als Zieladresse die zugeordnete Adresse des zweiten Gateway (6) und die Datenteile der Datenpakete die zu übertragenden Signalisierungsinformationen auf. Im zweiten Gateway (6) werden die Signalisierungsinformationen depaketiert und dann über das Leitungsvermittlungsnetz an den empfangenden Switch (21) übertragen.

## Beschreibung

Die Erfindung betrifft ein Verfahren und ein Gateway zum transparenten Übertragen von Außenband-Signalisierungsinformationen eines Leitungsvermittlungsnetzes über ein Paketvermittlungsnetz. Insbesondere betrifft die Erfindung das transparente Übertragen von SS7-Signalisierungsinformationen über ein IP-Netzwerk.

### Hintergrund der Erfindung

Zur Zwischenamtssignalisierung in Telekommunikationsnetzen wird international das sogenannte Signalisierungssystem Nr. 7 der ITU-T eingesetzt, im folgenden als SS7-Signalisierungssystem bezeichnet. Das SS7-Signalisierungssystem ist für den Austausch und die Vermittlung von Signalisierungsinformationen zwischen Vermittlungsstellen/Switches verantwortlich, die insbesondere den Auf- und Abbau von 64 kbit/s Nutzkanalverbindungen und die Steuerung von ISDN-Diensten und Zusatzdienstmerkmalen betreffen. Das SS7-Signalisierungssystem zeichnet sich dadurch aus, daß die Signalisierungsinformationen getrennt von den 64 kbit/s Nutzkanälen (Basiskanälen) auf einem gesonderten Signalisierungskanal übermittelt werden (Außenbandsignalisierung).

Die SS7-Signalisierungsinformationen weisen einen Nachrichtentransferteil (MTP) sowie getrennte Anwenderteile insbesondere für Fernsprechen (TUP) sowie zur Steuerung von ISDN-Dienstmerkmalen (ISUP) auf. Eine Ebene 2 des Nachrichtentransferteils MTP sorgt für eine gegen Übertragungsfehler des Signalisierungskanals gesicherte Übermittlung, eine Ebene 3 für die für die Nachrichtenlenkung (Routing) erforderlichen Funktionen des Signalisierungsnetzes.

Die Ebene 3 enthält als Steuerinformationen insbesondere die Adresse der sendenden Vermittlungsstelle (Origination Point Code OPC) und die Adresse der empfangenden Vermittlungsstelle (Destination Point Code DPC). Da Signalisierungsinformationen zu zahlreichen Nutzkanalverbindungen auf einem Signalisierungskanal übertragen werden, muß die Zugehörigkeit jeder Signalisierungsnachricht zu einem bestimmten Nutzkanal eindeutig gekennzeichnet werden. Dies erfolgt über ein CIC (Circuit Identification Code) Nachrichtenteil. Die CIC bzw. Nutzkanal-Kennung ist ebenfalls Bestandteil der Ebene 3 des Nachrichtentransferteils MTP.

Zur Übertragung von Informationen über Paketvermittlungsnetze ist das Internetprotokoll (IP) bekannt. In einem Paketvermittlungsnetz werden Daten zum Transfer in Datenpakete gepackt. Jedes Paket enthält dabei einen Vorspann (Header), in welchem u.a. die Absenderadresse und die Empfängeradresse angegeben sind. Zusätzlich enthält das Datenpaket in einem Datenteil eine Teilmenge der Daten, die versandt werden sollen. IP-Datenpakete werden in der Regel über die Protokolle TCP oder UDP übertragen, die jeweils über der IP-Schicht liegen.

Paketvermittelte Netze sind verbindungslos, d.h. jedes Paket wird einzeln und nicht im Zusammenhang mit anderen übertragen. Sie sind deswegen kostengünstiger als leitungsvermittelte Netze, bei denen Verbindungen mit der vollständigen Bandbreite eines Kanals zwischen zwei Punkten kontinuierlich zur Verfügung gestellt werden. Mit zunehmendem Maße werden daher Paketvermittlungsnetze auch zur Übertragung von Informationen verwendet, die traditionell ausschließlich in Leitungsvermittlungsnetzen übertragen wurden. Es wird in diesem Zusammenhang auf die bekannten VoIP (Voice over IP) Anwendungen, insbesondere die Internet-Telefonie verwiesen. Die zu übertragenden Daten werden dabei vor Eintritt in das Paketvermittlungsnetz mittels geeigneter Server, im folgenden als Gateways bezeichnet, komprimiert und in Paketen angeordnet. Dies erfolgt beispielsweise entsprechend der ITU-T-Empfehlung H.323. Nach Verlassen des Paketvermittlungsnetzes werden die Datenpakete depaketiert über übliche POTS/ISDN-Leitungen an ihre Zielbestimmung übertragen.

In diesem Zusammenhang stellt sich die Frage, wie die in einem gesonderten Signalisierungskanal enthaltenen Signalisierungsinformationen übertragen werden sollen, insbesondere, ob die Signalisierungsinformationen weiterhin über das leitungsvermittelte Telekommunikationsnetz oder ebenfalls über ein Paketvermittlungsnetz an die Zieladresse übertragen werden sollten.

### Aufgabe der Erfindung

Der vorliegenden Erfindung liegt die Aufgabe zugrunde, ein Verfahren und ein Gateway zur Übertragung von Außenband-Signalisierungsinformationen zur Verfügung zu stellen, die es in einfacher Weise ermöglichen, die Signalisierungsinformationen transparent über ein Paketvermittlungsnetz zu übertragen. Insbesondere soll die Möglichkeit geschaffen werden, SS7-Signalisierungsinformationen transparent über ein IP-Paketvermittlungsnetz zu übertragen.

### Zusammenfassung der Erfindung

Diese Aufgabe wird erfindungsgemäß durch ein Verfahren mit den Merkmalen des Anspruchs 1 und einen Gateway mit den Merkmalen des Anspruchs 12 gelöst. Bevorzugt und vorteilhafte Ausgestaltungen der Erfindungen sind in den Unteransprüchen angegeben.

Danach zeichnet sich das erfindungsgemäße Verfahren zum transparenten Übertragen von Signalisierungsinformationen über ein Paketvermittlungsnetz dadurch aus, daß in einem ersten Gateway zwischen Leitungs- und Paketvermittlungsnetz der Adresse des empfangenden Switch (Destination Point Code DPC) anhand einer Zuordnungsfunktion die Adresse eines Gateway zugeordnet wird, an den die Signalisierungsdaten im Paketvermittlungsnetz gesandt werden. Dieser zweite Gateway befindet sich bevorzugt in geographischer Nähe, d.h. insbesondere im gleichen Subnetz oder Ortsvermittlungsnetz wie der Switch, an den die Signalisierungsinformationen übertragen werden sollen.

Die Signalisierungsinformationen des Telekommunikationsnetzes werden im Gateway paketiert und in den Datenteilen der Pakete an den zugeordneten Gateway übertragen. Hierzu wird die der Adresse des empfangenen Switches zuvor zugeordnete Adresse des Gateway als Zieladresse in die zu übertragenden Pakete geschrieben. Nach Übertragung der Signalisierungsinformationen an den zweiten Gateway werden diese depaketiert und wieder zusammengesetzt. Dabei wird auch die Adresse des empfangenen Switch (DPC) erfaßt und werden die Signalisierungsinformationen dann in an sich bekannter Weise über das Leitungsvermittlungsnetz an den empfangenen Switch übertragen.

Die erfindungsgemäße Lösung ermöglicht es, die Signalisierungsinformationen aus Sicht des Leitungsvermittlungsnetzes transparent über ein Paketvermittlungsnetz zu übertragen. Dies ermöglicht die Beibehaltung der international standardisierten SS7-Signalisierung auch in einem paketvermittelten Transportnetz. Die erfindungsgemäße Lösung zeichnet sich neben einem hohen Maß an Transparenz und Kompatibilität auch dadurch aus, daß sie eine einfache und damit schnelle Lösung insofern zur Verfügung stellt, als auf zusätzliche Protokolle zur Übertragung der Signalisierungsinformationen über das Paketvermittlungsnetz verzichtet wird. Der Zieladresse der zu übertragenden Signalisierungsdaten wird lediglich die Adresse eines Gateways im Paketvermittlungsnetz zugeordnet und die Signalisierungsdaten in die Datenteile der im Paketvermittlungsnetz übertragenen Pakete geschrieben.

Eine Zuordnung zwischen der Adresse des empfangenden Switches und der Adresse des Gateways im Paketvermittlungsnetz, an den die Pakete gesandt werden, erfolgt bevorzugt nach dem Kriterium, ob der zugeordnete Gateway sich in geographischer Nähe zum empfangenden Switch befindet. Unter geographischer Nähe wird insbesondere verstanden, daß sich der Gateway im gleichen Teilnetz oder Ortsvermittlungsnetz wie der empfangende Switch befindet. Hierdurch wird sichergestellt, daß die Signalisierungsinformationen nur noch über eine kleine Strecke über das Leitungsvermittlungsnetz übertragen werden müssen.

Die Zuordnung zwischen der Adresse des empfangenden Switches und der Adresse eines Gateway im Paketvermittlungsnetz erfolgt über eine Zuordnungstabelle. Diese kann beispielsweise im ersten Gateway direkt enthalten sein oder alternativ von einem Management-System auf einem oder mehreren gesonderten Servern verwaltet und aktualisiert werden, auf den bzw. die der erste Gateway dann jeweils zurückgreift. Wichtig ist dabei, daß eine eindeutige Zuordnung zwischen den beiden betrachteten Adressen erfolgt. Aufgrund dieser Zuordnung erfolgt eine Übertragung von Signalisierungsinformationen zu einem bestimmten Gateway des Paketvermittlungsnetzes und von dort weiter zum Zielswitch (empfangenden Switch).

In einer vorteilhaften Weiterbildung der Erfindung werden die Signalisierungsinformationen zu mehreren Nutzkanalverbindungen auf der Übertragungsstrecke über das Paketvermittlungsnetz gemultiplext, d.h. jeweils Signalisierungsinformationen zu mehreren Nutzkanalverbindungen in ein Datenpaket geschrieben. Voraussetzung hierfür ist selbstverständlich, daß die Signalisierungsinformationen die gleiche Zieladresse (DPC) aufweisen. Dies wird bei zwei Gateways, die etwa zwei größere Städte über ein IP-Backbone verbinden, jedoch häufig der Fall sein.

Weiter liegt es im Rahmen der Erfindung, zusätzlich zu den Signalisierungsinformationen auch die Nutzdaten der zugehörigen Nutzkanalverbindungen in den Paketen anzuordnen. Die Außenbandsignalisierung wird in einem solchen Fall auf der Übertragungsstrecke über das Paketvermittlungsnetz aufgehoben.

Der erfindungsgemäße Gateway, der eine transparente Übertragung von Außenband-Signalisierungsinformationen über ein Paketvermittlungsnetz bereitstellt, weist eine erste Schnittstelle gegenüber dem Leitungsvermittlungsnetz und eine zweite Schnittstelle gegenüber dem Paketvermittlungsnetz auf, in denen jeweils eine Paketierung bzw. Depaketierung und eine Anpassung der jeweiligen Datenübertragungsstandards erfolgt. Erfindungsgemäß sind Zuordnungsmittel vorgesehen, die der Adresse eines empfangenden Switch (DPC) die Adresse eines Gateway im Paketvermittlungsnetz zuordnen, an den die Signalisierungsinformationen gesandt werden. Dabei wird die Adresse des durch die Zuordnung ermittelten Gateway als Zieladresse der im Paketvermittlungsnetz versandten Pakete gesetzt.

### Beschreibung mehrerer Ausführungsbeispiele

Die Erfindung wird nachfolgend unter Bezugnahme auf die Figuren der Zeichnung anhand mehrerer Ausführungsbeispiele näher erläutert. Es zeigen:
- Fig. 1 -: schematisch den Aufbau eines Telekommunikationsnetzes zur Durchführung des erfindungsgemäßen Verfahrens;
- Fig. 2 -: den Aufbau eines erfindungsgemäß ausgebildeten IP-Headers;
- Fig. 3 -: den Aufbau eines UDP/IP Datenpaketes;
- Fig. 4 -: einen alternativen Aufbau eines UDP/IP Datenpaketes;
- Fig. 5 -: den Aufbau eines erfindungsgemäßen Gateways und
- Fig. 6 -: den zeitlichen Ablauf eines Verfahrens zum transparenten Übertragen von SS7-Signalisierungsinformationen über ein Paketvermittlungsnetz.

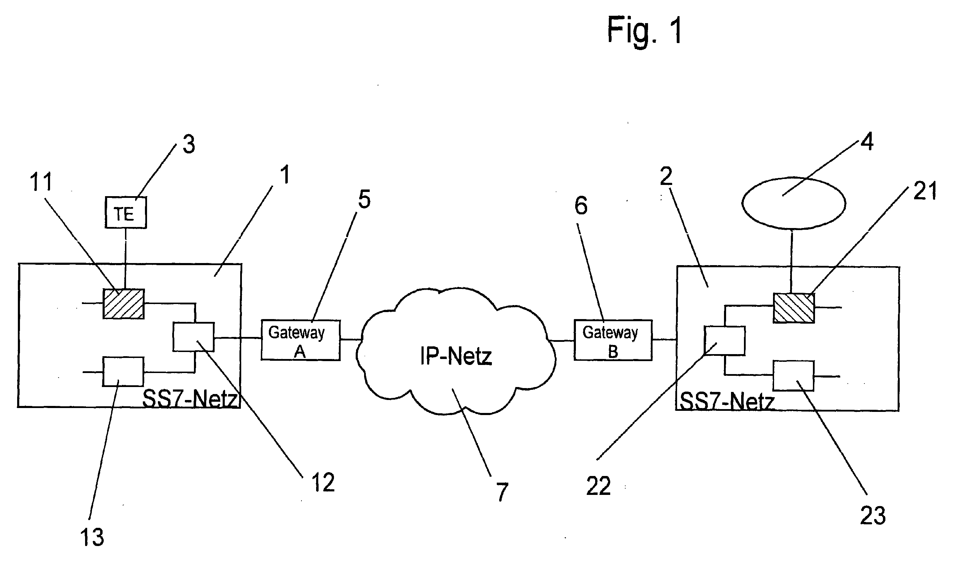

Fig. 1 zeigt eine Telekommunikationstruktur mit zwei leitungsvermittelten Telekommunikationsnetzen 1, 2, auf denen Signalisierungsinformationen gemäß dem ITU-T-Signalisierungssystem Nr. 7 übertragen werden. Die Telekommunikationsnetze 1, 2 werden im folgenden auch als SS7-Netze bezeichnet. Das SS7-Netz 1, 2 weist eine Vielzahl von Switches (Vermittlungsstellen) 11, 12, 13, 21, 22, 23 auf, zwischen denen die SS7-Signalisierungsinformationen übertragen werden. An die Switche/Vermittlungsstellen des SS7-Netzes sind direkt oder über TK-Anlagen/Router Endgeräte 3 oder lokale Netze 4 angeschlossen.

Es wird darauf hingewiesen, daß es sich bei den beiden SS7-Netzen 1, 2 und zwei unterschiedliche Netze oder Subnetze, jedoch ebenso um das gleiche Netz handeln kann, das lediglich über eine IP-Strecke überbrückt wird.

Die SS7-Netze 1, 2 sind jeweils über einen Gateway 5, 6 mit einem Paketvermittlungsnetz 7 verbunden. Bei dem Paketvermittlungsnetz 7 handelt es sich bevorzugt um ein IP-Backbone eines proprietären Netzes oder das Internet. Im Paketvermittlungsnetz 7 werden die Daten als IP-Pakete verbindungslos übertragen.

Jeder Gateway 5, 6 stellt eine Schnittstelle zwischen dem SS7-Netz 1, 2 und dem IP-Netz 7 dar. Er ist zum SS7-Netz (TDM-Netz) über eine oder mehrere 2 Mbit/s-Leitungen (E1-Gruppen) verbunden, auf denen einunddreißig 64 kbit/s Nutzkanäle und ein Signalisierungskanal gemultiplext werden.

Bei einer Übertragung der Nutzdaten über das IP-Netz werden die Daten der einzelnen 64 kbit/s Nutzkanäle in Pakete segmentiert und über das IP-Transportnetz an den Gateway 6 übertragen. Dies ist im Stand der Technik bekannt.

Die vorliegende Erfindung betrifft die Übertragung der zugehörigen Signalisierungsinformationen über das IP-Netz 7. Hierzu sei beispielhaft der Fall betrachtet, daß SS7-Signalisierungsinformationen vom Switch 11 als dem sendenden Switch über das SS7-Netz 1, den Gateway 5, das IP-Netz 7, dem Gateway 6, das SS7-Netz 2 zum Switch 21 als dem empfangenden Switch übersandt werden. Selbstverständlich kann eine Informationsübertragung auch in umgekehrter Richtung in entsprechender Weise erfolgen.

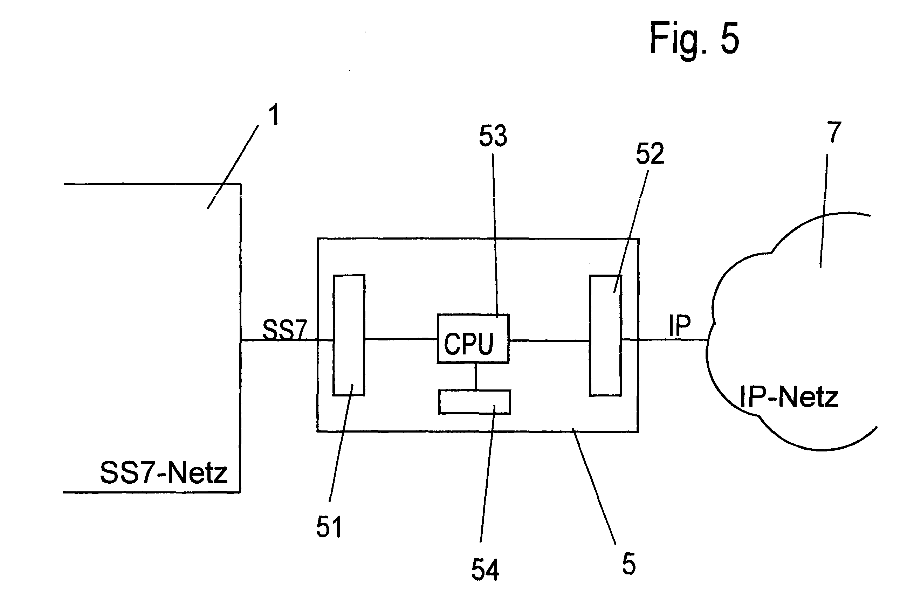

Fig. 5 zeigt den Aufbau eines erfindungsgemäßen Gateway 5. Das Gateway 5 weist zum SS7-Netz 1 eine erste Schnittstelle 51 auf, in der an das SS7-Netz gesandte Daten depaketiert werden und eine ggf. erforderliche Protokollkonvertierung durchgeführt wird. Des weiteren ist eine Schnittstelle 52 zum IP-Netz 7 vorgesehen, in der an das IP-Netz 7 gesandte Daten in IP-Pakete paketiert werden sowie eine ggf. erforderliche Protokollkonvertierung durchgeführt werden. Das Gateway 5 wird durch eine Steuereinrichtung 53 gesteuert, die aus einem üblichen Mikroprozessor oder spezialisierter Hardware (wie ASIC- (Application Specific Integrated -Circuit) oder PLD- (Programmable Logic Device) Bausteinen) mit Peripheriebausteinen und einer geeigneten Steuerungssoftware besteht. Die Steuereinrichtung 53 ist mit einem Modul 54 gekoppelt, die eine noch zu erläuternde Zuordnungstabelle aufweist.

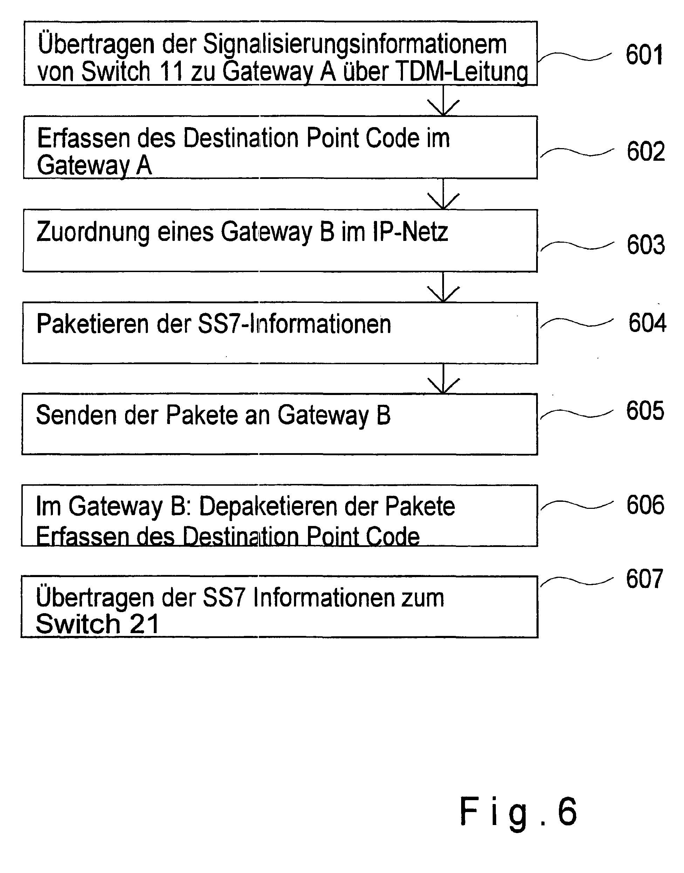

Das erfindungsgemäße Verfahren wird im folgenden anhand des Ablaufdiagramms der Fig. 6 und im Zusammenhang mit der Infrastruktur der Fig. 1 und 5 beschrieben.

An den Switch 21 des SS7-Signalisierungsnetzes zu übertragende Signalisierungsinformation wird vom Switch 11 zunächst über das SS7-Netz 1 an den Gateway 5 übertragen (Schritt 601). Die Signalisierungsinformation enthält dabei insbesondere MTP-Nachrichtenteile der Ebenen 2 und 3 und die ISUP-Anwenderteile für die Steuerung von ISDN-Dienstmerkmalen. Alternativ sind nur Nachrichtenteile der Ebene 3 und ISUP- und/oder andere Anwenderteile wie TCAP (Transaction Capability Application Part) oder MAP (Mobile Application Part) enthalten. Die Ebene 3 enthält als Steuerinformation sowohl die Adresse des sendenden Switch 11 und die Adresse des empfangenden Switch 21.

Im Gateway 5 werden die Signalisierungsinformationen von der Steuereinrichtung 53 erfaßt und der Destination Point Code DPC ermittelt (Schritt 602). Die Steuereinrichtung 53 muß nun festlegen, an welche Adresse im Paketvermittlungsnetz die Signalisierungsinformationen gesendet werden sollen. Hierzu greift sie auf eine im Modul 54 hinterlegte Zuordnungstabelle zurück, in der Adressen bestimmter Switches Adressen bestimmter Gateways im IP-Netz zugeordnet sind. Die Zuordnung erfolgt dabei bevorzugt derart, daß die Signalisierungsinformationen an ein Gateway gesandt werden, das im gleichen Subnetz oder Ortvermittlungsnetz liegt wie der Switch 21, an den die Informationen übertragen werden sollen.

Die entsprechende Zuordnungstabelle kann alternativ zu der Hinterlegung im Modul 54 auch von einem zentralen Managementsystem verwaltet und aktualisiert werden, bei dem die Steuereinrichtung 53 eine aktuelle Zuordnung anfragt. Bevorzugt ist die Zuordnungstabelle 54 jedoch im Gateway 5 direkt angeordnet, um Verzögerungszeiten auszuschließen. Dabei ist selbstverständlich vorgesehen, daß die Zuordnungsdaten regelmäßig aktualisiert werden.

Die Steuereinrichtung 53 ordnet dem Destination Point Code DPC des Switches 21 anhand der Zuordnungstabelle im Modul 54 eine bestimmte IP-Adresse zu, die eindeutig einen Gateway im IP-Netz identifiziert, an den die Signalisierungsinformationen gesendet werden. Im Ausführungsbeispiel der Fig. 1 ist dies gerade der Gateway 6 (Schritt 603).

Die an den Switch 21 zu übertragenden Signalisierungsinformationen werden nun derart paketiert, daß die Signalisierungsinformationen in die Datenteile der IP-Pakete geschrieben werden (Schritt 604). Die Signalisierungsdaten werden dabei unmittelbar, d.h. ohne zusätzliche Codierung ab MTP-Ebene 2 in den Datenteil des IP-Paketes geschrieben. Als Zieladresse des IP-Paketes wird die Adresse des ermittelten Gateway 6 gesetzt.

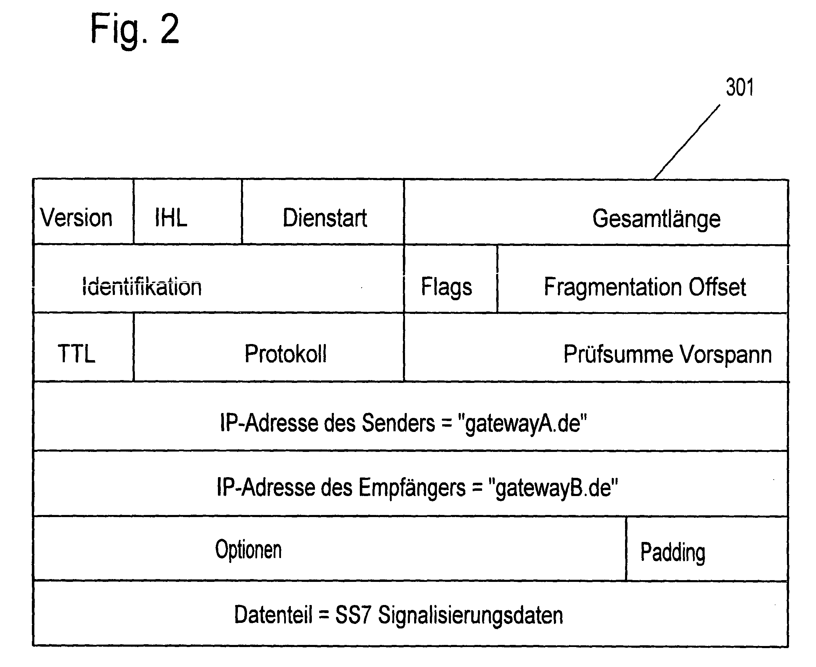

Dies ist in Fig. 2 dargestellt, das den Header eines üblichen IP-Paketes darstellt. In den Datenteil sind die zu übertragenden SS7-Signalisierungsdaten geschrieben. Die erfindungsgemäß gesetzte IP-Adresse des Empfängers ist im Beispiel der Fig. 2 "gatewayB.de". Die weiteren Felder sind in an sich bekannter Weise beschrieben.

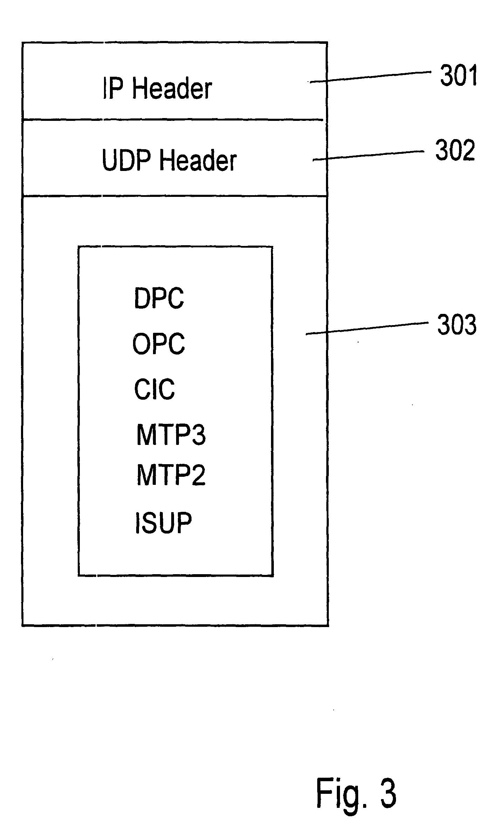

Die IP-Pakete werden nun vom Gateway 5 über das IP-Netz 7 an das Gateway 6 übertragen (Schritt 605). Die Übertragung erfolgt bevorzugt nach dem Protokoll UDP. Fig. 3 zeigt ein entsprechendes Datenpaket, das den IP-Header 301, den UDP-Header 302 und einen Datenteil 303 mit den Signalisierungsinformationen, insbesondere der Zieladresse DPC, der Ursprungsadresse OPC, der Nutzkanalkennung CIC sowie den weiteren Nachrichtenteilen des Nachrichtentransferteils MTP der Ebenen 2 und 3 und den ISUP-Anwenderteil enthält.

Im Gateway 6 werden die Datenpakete erfaßt und in an sich bekannter Weise depaketiert (Schritt 606). Der Gateway 6 ist dabei wie der Gateway 5 aufgebaut. Damit im Gateway 6 festgelegt werden kann, an welche Zieladresse DPC die Signalisierungsinformationen im SS7-Netz 2 geroutet werden sollen, liest die Steuereinrichtung des Gateways 6 den Destination Point Code DPC aus dem Datenteil aus. Dieser ist dabei bevorzugt gleich am Beginn des Datenteils mindestens eines IP-Pakets angeordnet.

Nach Zusammensetzen der Signalisierungsinformationen werden diese dann über das SS7-Netz 2 an den Switch 21 übertragen (Schritt 607).

Die hier beschriebene Übertragung von Signalisierungsdaten über ein Paketvermittlungsnetz erfolgt aus Sicht der beiden beteiligten SS7-Netze 1, 2 vollständig transparent. Ein eigenes Protokoll ist zur Übertragung der Signalisierungsinformationen nicht erforderlich.

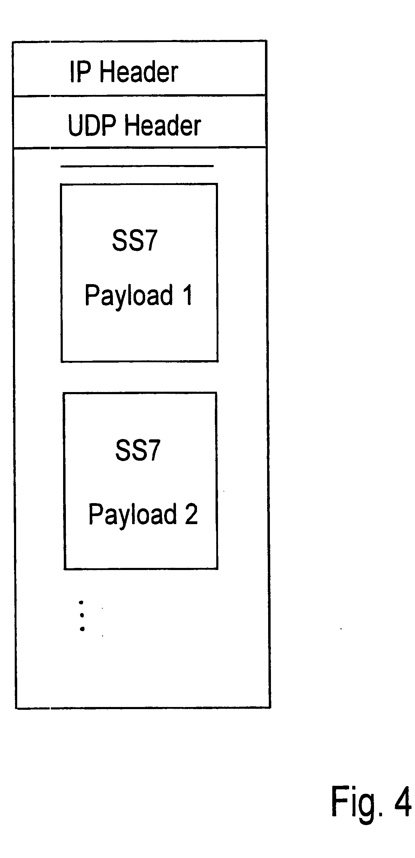

Ein weiteres alternatives Ausführungsbeispiel ist in Fig. 4 dargestellt. In diesem Ausführungsbeispiel werden die SS7-Signalisierungsinformationen zu mehreren Nutzkanälen im Gateway 5 gemultiplext, d.h. die Signalisierungsinformationen mehrerer Nutzkanalverbindungen in die jeweiligen IP-Pakete geschrieben. Dies ist naturgemäß nur dann sinnvoll, wenn die Signalisierungsinformationen an den gleichen Switch 21 gesandt werden sollen. Der Vorteil des Multiplexens der Signalisierungsinformationen besteht darin, daß die IP-Pakete schneller mit Bits aufgefüllt und damit schneller an das Gateway 6 gesandt werden können, so daß die Verzögerungszeiten bei der Übertragung vermindert werden.

In einer weiteren Alternative des erfindungsgemäßen Verfahrens werden die Signalisierungsinformationen mit den Nutzdaten der zugehörigen oder anderer Nutzkanalverbindungen gemultiplext. Auch hierdurch wird ermöglicht, die zu übertragenden Datenpakete schneller aufzufüllen. Es ist dann in einem Protokoll genau festzulegen, welche Daten Signalisierungsinformationen und welche Daten Nutzdaten darstellen.

In einer weiteren Alternative der Erfindung wird eine zusätzliche Zuordnung zwischen der Nutzkanalkennung CIC und dem Port des Gateways 6 vorgenommen, an den die IP-Pakete am Gateway 6 abgegeben werden. Es ist dabei eine bestimmte Anzahl von Port-Adressen am Gateway 6 für die Zuordnung der Nutzkanalkennungen CIC zu reservieren. Die Zuordnung zwischen der Nutzkanalkennung CIC und der Portnummer des Gateways 6 erfolgt in analoger Weise wie die Zuordnung der Adressen von empfangendem Switch 21 und empfangendem Gateway 6 in einer Zuordnungstabelle, die ebenfalls im Gateway 6 hinterlegt ist und auf die die Steuervorrichtung 53 zugreift. Die zugeordnete Portnummer wird dabei in das entsprechende Feld des für die Übertragung verwendeten UDP-Headers geschrieben.

Der Vorteil der Zuordnung zwischen Nutzkanalkennung CIC und Portnummer des empfangenen Gateways besteht darin, daß die Zuordnung der Signalisierungsinformationen zu den Nutzkanalverbindungen schneller erfaßt und bei der weiteren Vermittlung der Nutzkanalverbindungen einfacher berücksichtigt werden kann. So kann die Nutzkanalkennung in einfacher Weise im Gateway 6 unmittelbar dem UDP-Header der übersandten Pakete entnommen werden.

Die Erfindung beschränkt sich in ihrer Ausführung nicht auf die vorgenannten Ausführungsbeispiele. Beispielsweise können die Pakete statt nach dem Internet-Protokoll nach anderen paketvermittelten Protokollen wie ATM, Frame Relay oder IPX gebildet sein. Wesentlich für die Erfindung ist allein, daß zum transparenten Übertragen von Signalisierungsinformationen über ein Paketvermittlungsnetz der Zieladresse eines empfangenden Switch eine bestimmte Adresse eines Gateway zugeordnet wird und die Signalisierungsinformationen in paketierter Form an dieses Gateway übertragen werden.

## Patentansprüche

1. Verfahren zum transparenten Übertragen von Außenband-Signalisierungsinformationen eines Leitungsvermittlungsnetzes über ein Paketvermittlungsnetz, bei dem die Signalisierungsinformationen von einem sendenden Switch (11) zu einem ersten Gateway (5), der Leitungs- und Paketvermittlungsnetz koppelt, vom ersten Gateway über das Paketvermittlungsnetz (7) zu einem zweiten Gateway (6) und vom zweiten Gateway (6) zu einem empfangenden Switch (21) übertragen werden, wobei
a) die Signalisierungsinformationen jeweils die Adresse (OPC) des sendenden Switch (11) und die Adresse (DPC) des empfangenden Switch (21) im Leitungsvermittlungsnetz enthalten,
b) im ersten Gateway (5) die Adresse (DPC) des empfangenden Switch (21) erfaßt und dieser anhand einer Zuordnungstabelle die Adresse eines Gateway (6) zugeordnet wird, der als zweiter Gateway dient,
c) die Signalisierungsinformationen im ersten Gateway (5) paketiert und als Pakete bestehend aus Header (301, 302) und Datenteil (303) über das Paketvermittlungsnetz an den zweiten Gateway (6) übertragen werden, wobei
d) die Header (301) der Pakete als Zieladresse die zugeordnete Adresse des zweiten Gateway (6) und die Datenteile (303) der Datenpakete die zu übertragenden Signalisierungsinformationen aufweisen,
e) im zweiten Gateway (6) die Signalisierungsinformationen depaketiert und über das Leitungsvermittlungsnetz an den empfangenden Switch (21) übertragen werden.

2. Verfahren nach Anspruch 1, bei dem die Adresse des zweiten Gateway der Adresse des empfangenden Switch (DPC) nach dem Kriterium zugeordnet wird, ob der zweite Gateway sich in geographischer Nähe zum empfangenden Switch, insbesondere in dem gleichen Teilnetz oder Ortsvermittlungsnetz wie der empfangende Switch befindet.

3. Verfahren nach Anspruch 1, bei dem die Zuordnungstabelle, anhand derer die Adresse des empfangenden Switch (DPC) der Adresse eines Gateway im Paketvermittlungsnetz zugeordnet wird, im ersten Gateway vorhanden ist oder von einem Server eines Managementsystems verwaltet wird.

4. Verfahren nach Anspruch 1, bei dem die Signalisierungsinformationen im ersten Gateway direkt und ohne weitere Kodierung in die Datenteile der zu übertragenden Pakete geschrieben werden.

5. Verfahren nach mindestens einem der Ansprüche 1 bis 4, bei dem das Leitungsvermittlungsnetz ein Telekommunikationsnetz mit Zentralkanalsignalisierung gemäß dem ITU-T-Signalisierungssystem Nr. 7 ist und die zu übertragenden Signalisierungsinformationen solche des ITU-T-Signalisierungssystem Nr. 7, insbesondere Anwenderinformationen sind.

6. Verfahren nach mindestens einem der Ansprüche 1 bis 5, bei dem die Pakete im Paketvermittlungsnetz entsprechend dem Internet-Protokoll (IP) oder anderen paketvermittelten Protokollen wie ATM, Frame Relay oder IPX gebildet sind.

7. Verfahren nach den Ansprüchen 4, 5 und 6, bei dem neben Anwenderinformationen auch MTP-Nachrichten insbesondere der Ebenen 2 und 3 in die Datenteile der Pakete geschrieben werden.

8. Verfahren nach den Ansprüchen 5 und 6, bei dem die Adresse des empfangenden Switch (DPC) an den Anfang des Datenteils mindestens eines Pakets geschrieben und im empfangenden Gateway aus dem Datenteil ausgelesen wird.

9. Verfahren nach mindestens einem der Ansprüche 5 bis 8, bei dem die IP-Pakete im Paketvermittlungsnetz gemäß den Protokollen UDP oder TCP übertragen werden und Signalisierungsinformation (CIC) betreffend die Zuordnung der Signalisierung zu einem bestimmten Nutzkanal einer bestimmten Portnummer des TCP/UDP Headers zugeordnet werden.

10. Verfahren nach mindestens einem der Ansprüche 5 bis 9, bei dem die Pakete neben zu übertragenden Signalisierungsinformationen zusätzlich Nutzdaten der zugehörigen Nutzkanalverbindungen enthalten.

11. Verfahren nach mindestens einem der Ansprüche 5 bis 10, bei dem die Signalisierungsinformationen zu mehreren Nutzkanalverbindungen auf der Übertragungsstrecke über das Paketvermittlungsnetz gemultiplext werden.

12. Gateway zwischen einem Leitungsvermittlungsnetz und einem Paketvermittlungsnetz, der Außenband-Signalisierungsinformationen des Leitungsvermittlungsnetzes zwischen den beiden Netzen transparent überträgt, mit
a) einer ersten Schnittstelle (51) gegenüber dem Leitungsvermittlungsnetz (1),
b) einer zweiten Schnittstelle (52) gegenüber dem Paketvermittlungsnetz (7),
c) Zuordnungsmitteln (53, 54), die der Adresse eines empfangenden Switch (21) die Adresse eines Gateway (6) zuordnen, an den die Signalisierungsinformationen über das Paketvermittlungsnetz (7) gesandt werden,
d) Mitteln (53) zum Setzen der Adresse des durch die Zuordnungsmittel ermittelten Gateway als Zieladresse der an den Gateway (6) gesendeten Pakete.

13. Gateway nach Anspruch 12, bei dem die Zuordnungsmittel (53, 54) auf eine Zuordnungstabelle zurückgreifen, in der die Adressen von Switches des Leitungsvermittlungsnetzes den Adressen von Gateways des Paketvermittlungsnetzes zugeordnet sind.

14. Gateway nach Anspruch 13, bei dem die Zuordnungstabelle eine Zuordnung nach dem Kriterium vornimmt, ob der zugeordnete Gateway (6) sich in geographischer Nähe zum empfangenden Switch (21), insbesondere in dem gleichen Teilnetz oder Ortsvermittlungsnetz wie der empfangende Switch befindet.

15. Gateway nach mindestens einem der Ansprüche 12 bis 14, der zusätzlich Mittel aufweist, die die Adresse des empfangenden Switch (21) an den Anfang des Datenteils (303) mindestens eines Pakets schreiben.

16. Gateway nach mindestens einem der Ansprüche 12 bis 15, der zusätzlich Mittel aufweist, die die Adresse (DPC) des empfangenden Switch (21) in ein unbenutzes oder nicht unbedingt benötigtes Feld des Headers (301) mindestens eines Pakets schreiben.

17. Gateway nach mindestens einem der Ansprüche 12 bis 16, der zusätzlich Mittel aufweist, die Signalisierungsinformationen (CIC) betreffend die Zuordnung der Signalisierung zu einem bestimmten Nutzkanal einer bestimmten Portnummer eines TCP/UDP Headers zuordnen und die Portnummer entsprechend setzen.

18. Gateway nach mindestens einem der Ansprüche 12 bis 17, der zusätzlich einen Multiplexer aufweist, der die Signalisierungsinformationen mehrerer Nutzkanalverbindungen in die über das Paketvermittlungnetz an eine bestimmte Adresse zu übertragenden Pakete schreibt.
